# EUROPEAN PATENT SPECIFICATION

(11) **EP 2 745 336 B1**
(45) Date of publication and mention of the grant of the patent: **11.07.2018**
(21) Application number: 12823632.0
(22) Date of filing: 31.07.2012
(51) Int. Cl.: H01M 2/10, H01M 2/02, H01M 2/20, H01M 2/34

(54) **BATTERY MODULE**
BATTERIEMODUL
MODULE DE PILE

(30) Priority: 17.08.2011 CN 201110235424
(43) Date of publication of application: 25.06.2014
(73) Proprietor: Shenzhen BYD Auto R&D Company Limited, Shenzhen, Guangdong 518118 (CN); BYD Company Limited, Shenzhen, Guangdong 518118 (CN)
(72) Inventor: WANG, Linglong, Shenzhen Guangdong 518118 (CN); LENG, Chenwei, Shenzhen Guangdong 518118 (CN); ZHOU, Yanfei, Shenzhen Guangdong 518118 (CN); GAO, Rui, Shenzhen Guangdong 518118 (CN); WU, Haiping, Shenzhen Guangdong 518118 (CN); SONG, Yining, Shenzhen Guangdong 518118 (CN)
(74) Representative: Hoffmann Eitle
(86) International application number: PCT/CN2012/079406
(87) International publication number: WO 2013/023524

(56) References cited:
- CN-A- 1 881 654
- CN-A- 101 141 012
- CN-U- 201 742 041
- US-A1- 2006 091 891
- US-A1- 2009 155 673
- US-A1- 2010 248 008
- US-A1- 2011 059 342
- US-B1- 6 236 216
- US-B2- 7 349 813

## Description

### CROSS REFERENCE TO RELATED APPLICATIONS

This application claims priority and benefits of Chinese Patent Application No. 201110235424.2, filed with State Intellectual Property Office, P. R. C. on August 17, 2011.

### FIELD

The present disclosure generally relates to battery field, more particularly, to a battery module for an electric vehicle.

### BACKGROUND ART

In order to reduce vehicle emission, batteries are used as power resources of vehicles instead of petrol, and hybrid vehicle and pure electric vehicles have been manufactured.

A cruising mileage of a battery pack is significant for the electric vehicle, so that the key for increasing the cruising mileage of the electric vehicle becomes how to arrange as many batteries as possible in a limited space of the electric vehicle.

In most of electric vehicles, sampling wires inside of the battery pack are fixed in the form of wire bundles, which may cause problems such as a desultory arrangement and crossing of the wires, so that it was easily to cause a short circuit if skins of the wires would be broken. Moreover, the desultorily arrangement of the wires will make a maintain work difficult, especially, as the battery pack includes a plurality of cells.

US 2010/248008 A1 discloses a battery module having a plurality of battery cells, a casing in which the plurality of battery cells are housed, a plurality of conductive members that electrically connect the plurality of battery cells, and a voltage detection conductor that detects voltages at each of the plurality of battery cells.

US 2011/059342 A1 discloses a voltage sensing member for sensing voltages of battery cells constituting a battery module, wherein the voltage sensing member includes a pair of supporting parts, a connection part, conductive sensing parts, and a connector.

US 2006/0091891 A1 relates to a member for measurement of cell voltage and temperature of a battery pack.

US 7,349,813 B2 discloses an architecture to supply electrical operating power in fluid flow measurement applications, apparatuses and associated systems.

### SUMMARY OF THE DISCLOSURE

Embodiments of the present disclosure seek to solve at least one of the problems existing in the prior art to at least some extent.

Embodiments of the present disclosure provide a battery module with an external wiring trough for sampling wires, in which the sampling wires can be arranged in the wiring trough orderly and a risk of short circuit can be eliminated.

The battery module according to embodiments of the present disclosure comprises the features of claim 1. Other optional aspects of the claimed subject-matter are disclosed in the wordings of the dependent claims 2-13. With the battery module according to embodiments of the present disclosure, the wiring trough can be attached closely to the battery module, so that the proper positioning of the sampling wire inside the wiring trough can be ensured, and an amount of the sampling wires and the cost can be reduced. Additionally, the desultory arrangement and crossing of the wires as well as the short circuit can be avoided.

Further, the wiring trough has a slot for arranging the sampling wire and a lead-out groove for leading out the sampling wire, and the slot and lead-out groove are formed in each of inner and outer sides of the wiring trough.

In some embodiments, the lead-out groove has a U shape.

In some embodiments, the sampling wire is fixed into the wiring trough by an adhesive and led out via the lead-out groove.

In some embodiments, the signal sampling terminal includes a voltage sampling terminal electrically connected to the connector and a temperature sampling terminal connected to the connector.

In some embodiments, the sampling wire includes a voltage sampling wire connected to the voltage sampling terminal and a temperature sampling wire connected to the temperature sampling terminal.

In some embodiments, the slot includes a voltage sampling wire slot formed in the inner side of the wiring trough and a temperature sampling wire slot formed in the outer side of the wiring trough, the voltage sampling wire is fixed into the voltage sampling wire slot, and the temperature sampling wire is fixed into the temperature sampling wire slot.

In some embodiments, an installation unit is disposed on the case, and the wiring trough is mounted onto the installation unit.

In some embodiments, the installation unit includes a supporting part and a positioning part, the wiring trough is received in the supporting part and positioned by the positioning part.

In some embodiments, the wiring trough is bonded to the installation unit.

In some embodiments, the BIC module includes a housing and a circuit board disposed inside the housing and electrically connected to the sampling wire.

In some embodiments, a fixing part for fixing the BIC module is disposed on the case.

In some embodiments, a plurality of threaded holes are formed in the fixing part, and the fixing part is mounted to the case by screws.

In some embodiments, the BIC module is fixed to the fixing part by a snap-fit structure disposed on the fixing part.

### BRIEF DESCRIPTION OF THE DRAWINGS

Fig.1 is a schematic view of a battery module according to an embodiment of the present disclosure;
Fig.2 is a schematic view of a wiring trough of the battery module according to an embodiment of the present disclosure;
Fig.3 is a partially enlarged view of A part in Fig. 2; and
Fig.4 is a schematic view of case of the battery module according to an embodiment of the present disclosure.

### DETAILED DESCRIPTION

Reference will be made in detail to embodiments of the present disclosure. The embodiments described herein with reference to drawings are explanatory, illustrative, and used to generally understand the present disclosure. The embodiments shall not be construed to limit the present disclosure. The same or similar elements and the elements having same or similar functions are denoted by like reference numerals throughout the descriptions.

Unless specified or limited otherwise, the terms "mounted," "connected," "supported," and "coupled" and variations thereof are used broadly and encompass both direct and indirect mountings, connections, supports, and couplings. Further, "connected" and "coupled" are not restricted to physical or mechanical connections or couplings.

Also, it is to be understood that phraseology and terminology used herein with reference to device or element orientation (such as, for example, terms like "central," "upper," "lower," "front," "rear," and the like) are only used to simplify description of the present invention, and do not alone indicate or imply that the device or element referred to must have a particular orientation.

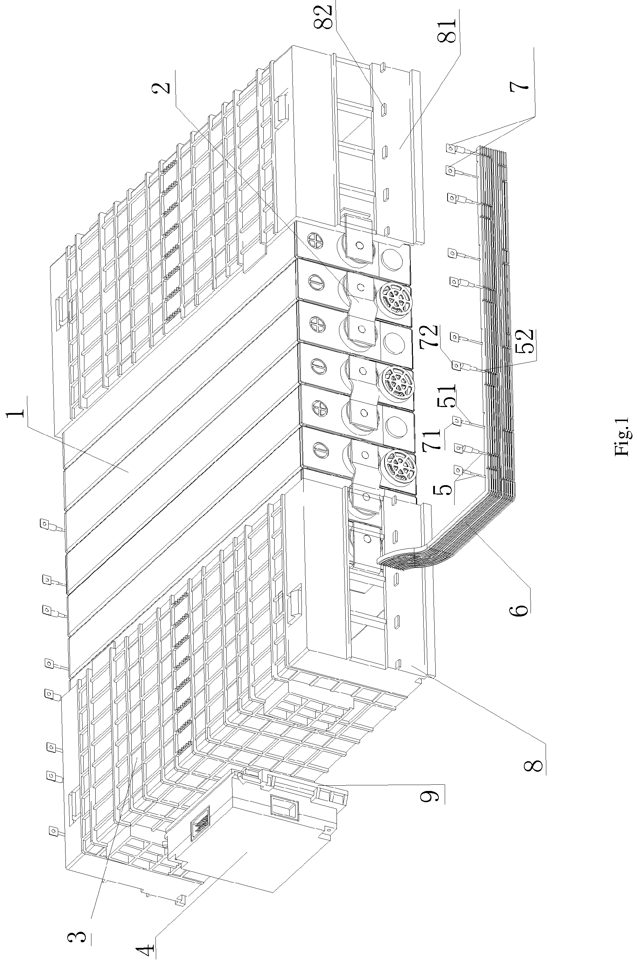

The battery module according to embodiments of the present disclosure will be described below with reference of Figs. 1 to5.

As shown in Fig. 1, the battery module according to embodiments of the present disclosure comprises a battery pack and a case 3. The battery pack includes a plurality of cells 1 and a plurality of connectors 2 configured to electrically connect adjacent cells 1 respectively. The case 3 wraps the battery pack. The structure and combination of the battery pack and case 3 are well known in the art, for instance, the connectors 2 connect the cells in series or in parallel to form the battery pack, and then the case 3 wraps the battery pack. Therefore, the details of the battery and case will be omitted here.

Moreover, the battery module according to embodiments of the present disclosure also comprises a sampling unit fixed onto the case 3. The sampling unit includes: a BIC (battery information collection) module 4, sampling wires 5, a wiring trough 6 and a signal sampling terminal 7. The BIC module 4 may be fixed onto the case 3, the wiring trough 6 may be fixed onto the case, and the sampling wires 5 are disposed within the wiring trough 6 and have a first end electrically connected to the BIC module 4 and a second end electrically connected to the signal sampling terminal 7.

In this embodiment, the signal sampling terminal 7 collects related signals of the battery module, and then converts these related signals into electric signals which finally are collected into the BIC module 4 via the sampling wires 5, so that various conditions of the battery module can be monitored.

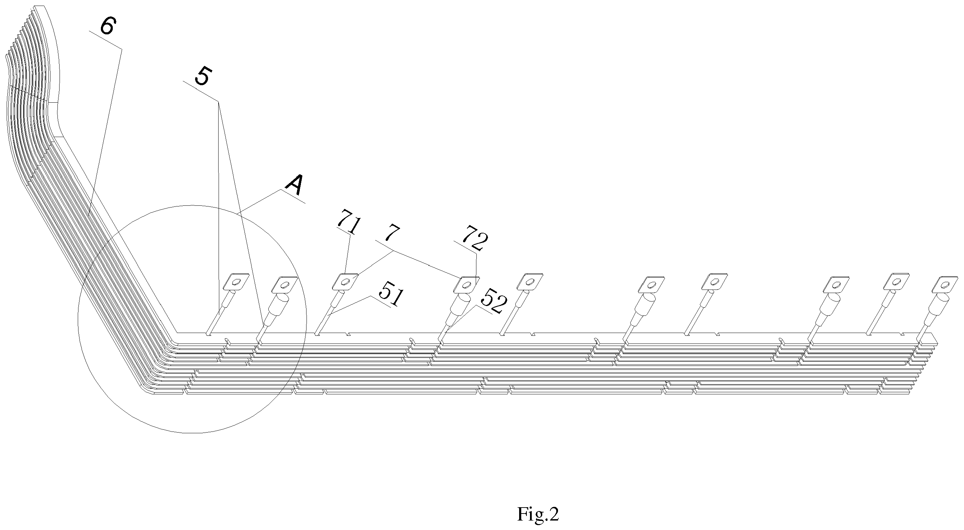

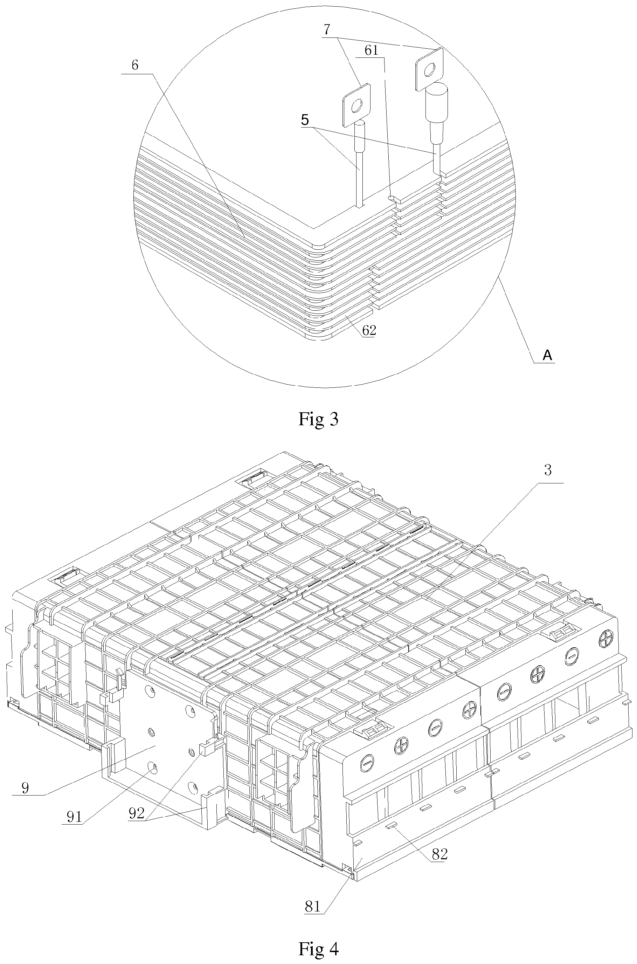

As shown in Fig. 2 and 3, the wiring trough 6 has slots 62 for arranging the sampling wire 5 and lead-out grooves 61 for leading out the sampling wires 5. The wiring trough 6 may be molded integrally. In the molding process, a dimension of the slot 62 and a location of the lead-out groove 61 may be determined based on requirements of structures and dimensions of the battery module and sampling wire 5. The wiring trough 6 may be manufactured via other manners.

The lead-out groove 61 may have various shapes such as a square shape, a V shape or a U shape. Preferably, the U shape is used, because the U-shaped lead-out groove has an arcuate end which is advantageous for arranging and leading out the sampling wire 5.

The slot 62 and lead-out groove 61 may be formed in the same side or in both sides (inner and outer sides) of the wiring trough 6. In this embodiment, the slot 62 and lead-out groove 61 are formed in each of inner and outer sides of the wiring trough 6, so that the number of the wiring trough 6 and the size of the battery module can be reduced.

The sampling wire 5 may be fixed into the wiring trough by an adhesive and led out via the lead-out groove 61. However, the fixing manner of the sampling wire 5 is not limited to this, for example, the sampling wire 5 may be fixed in the slot 62 via snap-fit or clamping structures.

Various terminals may be adopted as the signal sampling terminal 7 based on different requirements of various sampling signals such as terminals for sampling voltage, current and temperature. In this embodiment, the signal sampling terminal 7 includes a voltage sampling terminal 71 electrically connected to the connector 2 and a temperature sampling terminal 72 connected to the connector 2. The temperature sampling terminal 72 may be connected to the connector 2 via a connection structure having a good thermal conductivity, for example, the temperature sampling terminal 72 may be attached closely to the connector 2.

According to the various sampling signals, the sampling wire 5 may include various wire, such as voltage sampling wire, current sampling wire and temperature sampling wire. In this embodiment, the sampling wire 5 includes a voltage sampling wire 51 connected to the voltage sampling terminal 71 and a temperature sampling wire 52 connected to the temperature sampling terminal 72.

Correspondingly, the slot 62 may include various slots, such as voltage sampling wire slot, current sampling wire slot and temperature sampling wire slot. In this embodiment, the slot 5 includes a voltage sampling wire slot formed in one side of the wiring trough 6 and a temperature sampling wire slot formed in another side of the wiring trough 6. The voltage sampling wire 51 is fixed into the voltage sampling wire slot, and the temperature sampling wire 52 is fixed into the temperature sampling wire slot.

For different wiring troughs 6, the sampling wire 5 may be fixed via different manners. As shown in Fig. 3, in this embodiment, the lead-out groove 61 and the slot 62 may formed in each of both inner and outer sides of the wiring trough 6, accordingly, the voltage sampling wire 51 is fixed into the slot 62 formed in the inner side of the wiring trough 6 and the temperature sampling wire 52 is fixed into the slot 62 formed in the outer side of the wiring trough 6, in other words, the voltage sampling wire 51 is fixed into the voltage sampling wire slot formed in the side adjacent to the battery pack , and the temperature sampling wire 52 is fixed into the temperature sampling wire slot formed in the side away from the battery pack. The arranging place of the sampling wire 5 in the wiring trough 6 may be determined according to specific requirements and various structures of the above elements.

As shown in Fig. 1, during manufacturing the case 3, an installation unit is formed on the case 3 for mounting the wiring trough 6. The wiring trough 6 is mounted onto the installation unit 8. Shape and location of the installation unit 8 may be determined depending on installation requirements of the location and width of the siring trough 6. In this embodiment, the installation unit 8 is disposed on an edge of the case 3 so that the installation unit 8 is easy to mount.

The installation unit 8 may includes a supporting part 81 and a positioning part 82, the wiring trough 6 is received in the supporting part 81 and positioned by the positioning part 82. Preferably, the wiring trough 6 is bonded to the installation unit 8. In addition to the bonding manner, the wiring trough 6 may be fixed onto the installation unit 8 via other manners such as fixing by screw.

As shown in Fig. 1 and Fig.4, the BIC module is a kind of bus interface module and includes a housing and a circuit board disposed inside the housing. The housing may ensure insulating the BIC module, and the circuit board is electrically connected to the sampling wire so as to collect, process and transmit the sampled signals. Structure and function of the BIC module is appreciated by those skilled in the art, so that details thereof are omitted here.

In this embodiment, preferably, a fixing part 9, in which BIC module 4 is fixed, is disposed on the case 3. The BIC module 4 may also be fixed onto the case 3 by other fixing manners, such as fixing by screw or bonding by a super adhesive.

A plurality of threaded holes 91 may be formed in the fixing part 9, and the fixing part 9 may be mounted to the case 3 by screws (not shown). Moreover, the BIC module 4 may have a snap-fit structure 92, so that the BIC module may be fixed to the fixing part 9 by the snap-fit structure 92.The BIC module 4 may also be fixed by other fixing manners.

With the battery module according to embodiments of the present disclosure, the wiring trough can be attached closely to the battery module, so that the proper positioning of the sampling wire inside the wiring trough can be ensured, and an amount of the sampling wires and the cost can be reduced. Additionally, the desultory arrangement and crossing of the wires as well as the short circuit can be avoided.

Reference throughout this specification to "an embodiment," "some embodiments," "one embodiment", "another example," "an example," "a specific examples," or "some examples," means that a particular feature, structure, material, or characteristic described in connection with the embodiment or example is included in at least one embodiment or example of the present disclosure. Thus, the appearances of the phrases such as "in some embodiments," "in one embodiment", "in an embodiment", "in another example, "in an example," "in a specific examples," or "in some examples," in various places throughout this specification are not necessarily referring to the same embodiment or example of the present disclosure. Furthermore, the particular features, structures, materials, or characteristics may be combined in any suitable manner in one or more embodiments or examples.

Although explanatory embodiments have been shown and described, it would be appreciated by those skilled in the art that the above embodiments can not be construed to limit the present disclosure, and changes, alternatives, and modifications can be made in the embodiments without departing from spirit, principles and scope of the present disclosure.

## Claims

1. A battery module, comprising:
a battery pack including a plurality of cells (1) and a plurality of connectors (2) for electrically connecting adjacent cells (1) respectively;
a case (3) housing the battery pack; and
a sampling unit fixed to the case (3) and including:
a BIC module (4) fixed onto the case (3);
a wiring trough (6) fixed onto the case (3);
a signal sampling terminal (7); and
a sampling wire (5) disposed within the wiring trough (6) and having a first end electrically connected to the BIC module (4) and a second end electrically connected to the signal sampling terminal;
wherein the wiring trough (6) has a slot (62) for arranging the sampling wire (5) and a lead-out groove (61) for leading out the sampling wire (5), **characterized in that**
the slot (62) and lead-out groove (61) are formed in each of inner and outer sides of the wiring trough (6) respectively .

2. The battery module as set forth in claim 1, wherein the lead-out groove (61) has a U shape.

3. The battery module as set forth in claim 1, wherein the sampling wire (5) is fixed into the wiring trough (6) by an adhesive and led out via the lead-out groove (61).

4. The battery module as set forth in claim 1, wherein the signal sampling terminal (7) includes a voltage sampling terminal (71) electrically connected to the connector (2) and a temperature sampling terminal (72) connected to the connector (2).

5. The battery module as set forth in claim 4, wherein the sampling wire (5) includes a voltage sampling wire (51) connected to the voltage sampling terminal (71) and a temperature sampling wire (52) connected to the temperature sampling terminal (72).

6. The battery module as set forth in claim 5, wherein the slot (62) includes a voltage sampling wire slot formed in the inner side of the wiring trough (6) and a temperature sampling wire slot formed in the outer side of the wiring trough (6), the voltage sampling wire (51) is fixed into the voltage sampling wire slot, and the temperature sampling wire (52) is fixed into the temperature sampling wire slot.

7. The battery module as set forth in claim 1, wherein an installation unit (8) is disposed on the case (3), and the wiring trough (6) is mounted onto the installation unit (8).

8. The battery module as set forth in claim 7, wherein the installation unit (8) includes a supporting part (81) and a positioning part (82), the wiring trough (6) is received in the supporting part (81) and positioned by the positioning part (82).

9. The battery module as set forth in claim 7, wherein the wiring trough (6) is bonded to the installation unit (8).

10. The battery module as set forth in claim 1, wherein the BIC module (4) includes a housing and a circuit board disposed inside the housing and electrically connected to the sampling wire (5).

11. The battery module as set forth in claim 1, wherein a fixing part (9) for fixing the BIC module (4) is disposed on the case (3).

12. The battery module as set forth in claim 11, wherein a plurality of threaded holes (91) are formed in the fixing part (9), and the fixing part (9) is mounted to the case (3) by screws.

13. The battery module as set forth in claim 11, wherein the BIC module (4) is fixed to the fixing part (9) by a snap-fit structure (92) disposed on the fixing part (9).

## Patentansprüche

1. Batteriemodul, umfassend:
ein Batteriepack mit einer Vielzahl von Zellen (1) und einer Vielzahl von Verbindern (2) zum jeweiligen elektrischen Verbinden benachbarter Zellen (1);
ein Gehäuse (3), in dem das Batteriepack untergebracht ist; und
eine Abtasteinheit, die an dem Gehäuse (3) befestigt ist und Folgendes aufweist:
ein BIC-Modul (4), das an dem Gehäuse (3) befestigt ist;
eine Verdrahtungsrille (6), die an dem Gehäuse (3) befestigt ist;
einen Signalabtastanschluss (7); und
einen Abtastdraht (5), der in der Verdrahtungsrille (6) angeordnet ist und ein erstes Ende, das elektrisch mit dem BIC-Modul (4) verbunden ist, und ein zweites Ende aufweist, das elektrisch mit dem Signalabtastanschluss verbunden ist;
wobei die Verdrahtungsrille (6) einen Schlitz (62) zum Anordnen des Abtastdrahtes (5) und eine Herausführungsnut (61) zum Herausführen des Abtastdrahtes (5) aufweist, **dadurch gekennzeichnet, dass**
der Schlitz (62) und die Herausführungsnut (61) jeweils in der Innen- und der Außenseite der Verdrahtungsrille (6) gebildet sind.

2. Batteriemodul nach Anspruch 1, wobei die Herausführungsnut (61) eine U-Form aufweist.

3. Batteriemodul nach Anspruch 1, wobei der Abtastdraht (5) durch einen Klebstoff in der Verdrahtungsrille (6) befestigt ist und über die Herausführungsnut (61) herausgeführt ist.

4. Batteriemodul nach Anspruch 1, wobei der Signalabtastanschluss (7) einen Spannungsabtastanschluss (71), der elektrisch mit dem Verbinder (2) verbunden ist, und einen Temperaturabtastanschluss (72) aufweist, der mit dem Verbinder (2) verbunden ist.

5. Batteriemodul nach Anspruch 4, wobei der Abtastdraht (5) einen Spannungsabtastdraht (51), der mit dem Spannungsabtastanschluss (71) verbunden ist, und einen Temperaturabtastdraht (52) aufweist, der mit dem Temperaturabtastanschluss (72) verbunden ist.

6. Batteriemodul nach Anspruch 5, wobei der Schlitz (62) einen Spannungsabtastdrahtschlitz, der in der Innenseite der Verdrahtungsrille (6) gebildet ist, und einen Temperaturabtastdrahtschlitz aufweist, der in der Außenseite der Verdrahtungsrille (6) gebildet ist, der Spannungsabtastdraht (51) in dem Spannungsabtastdrahtschlitz befestigt ist und der Temperaturabtastdraht (52) in dem Temperaturabtastdrahtschlitz befestigt ist.

7. Batteriemodul nach Anspruch 1, wobei eine Installationseinheit (8) an dem Gehäuse (3) angeordnet ist und die Verdrahtungsrille (6) an der Installationseinheit (8) angebracht ist.

8. Batteriemodul nach Anspruch 7, wobei die Installationseinheit (8) ein Stützteil (81) und ein Positionierteil (82) aufweist, die Verdrahtungsrille (6) in dem Stützteil (81) aufgenommen ist und von dem Positionierteil (82) positioniert ist.

9. Batteriemodul nach Anspruch 7, wobei die Verdrahtungsrille (6) an die Installationseinheit (8) gebondet ist.

10. Batteriemodul nach Anspruch 1, wobei das BIC-Modul (4) ein Gehäuse und eine Leiterplatte aufweist, die innerhalb des Gehäuses angeordnet und elektrisch mit dem Abtastdraht (5) verbunden ist.

11. Batteriemodul nach Anspruch 1, wobei ein Befestigungsteil (9) zum Befestigen des BIC-Moduls (4) an dem Gehäuse (3) angeordnet ist.

12. Batteriemodul nach Anspruch 11, wobei eine Vielzahl von Gewindelöchern (91) in dem Befestigungsteil (9) gebildet ist und das Befestigungsteil (9) an dem Gehäuse (3) durch Schrauben angebracht ist.

13. Batteriemodul nach Anspruch 11, wobei das BIC-Modul (4) an dem Befestigungsteil (9) durch eine Schnappverschlussstruktur (92) befestigt ist, die an dem Befestigungsteil (9) angeordnet ist.

## Revendications

1. Module de batterie, comprenant :
un bloc-batterie comportant une pluralité de cellules (1) et une pluralité de connecteurs (2) pour connecter électriquement des cellules adjacentes (1) respectivement ;
un boîtier (3) logeant le bloc-batterie ; et
une unité d'échantillonnage fixée au boîtier (3) et comportant :
un module BIC (4) fixé sur le boîtier (3) ;
une gorge de câblage (6) fixée sur le boîtier (3) ;
une borne d'échantillonnage de signal (7) ; et
un câble d'échantillonnage (5) disposé au sein de la gorge de câblage (6) et ayant une première extrémité connectée électriquement au module BIC (4) et une seconde extrémité connectée électriquement à la borne d'échantillonnage de signal ;
dans lequel la gorge de câblage (6) a une fente (62) pour agencer le câble d'échantillonnage (5) et une rainure de sortie (61) pour faire sortir le câble d'échantillonnage (5), **caractérisé en ce que**
la fente (62) et la rainure de sortie (61) sont formées dans chacun des côtés interne et externe de la gorge de câblage (6) respectivement.

2. Module de batterie selon la revendication 1, dans lequel la rainure de sortie (61) a une forme de U.

3. Module de batterie selon la revendication 1, dans lequel le câble d'échantillonnage (5) est fixé dans la gorge de câblage (6) par un adhésif et sorti via la rainure de sortie (61).

4. Module de batterie selon la revendication 1, dans lequel la borne d'échantillonnage de signal (7) comporte une borne d'échantillonnage de tension (71) connectée électriquement au connecteur (2) et une borne d'échantillonnage de température (72) connectée au connecteur (2).

5. Module de batterie selon la revendication 4, dans lequel le câble d'échantillonnage (5) comporte un câble d'échantillonnage de tension (51) connecté à la borne d'échantillonnage de tension (71) et un câble d'échantillonnage de température (52) connecté à la borne d'échantillonnage de température (72).

6. Module de batterie selon la revendication 5, dans lequel la fente (62) comporte une fente pour câble d'échantillonnage de tension formée dans le côté interne de la gorge de câblage (6) et une fente pour câble d'échantillonnage de température formée dans le côté externe de la gorge de câblage (6), le câble d'échantillonnage de tension (51) est fixé dans la fente pour câble d'échantillonnage de tension, et le câble d'échantillonnage de température (52) est fixé dans la fente pour câble d'échantillonnage de température.

7. Module de batterie selon la revendication 1, dans lequel une unité d'installation (8) est disposée sur le boîtier (3), et la gorge de câblage (6) est montée sur l'unité d'installation (8).

8. Module de batterie selon la revendication 7, dans lequel l'unité d'installation (8) comporte un élément de support (81) et un élément de positionnement (82), la gorge de câblage (6) est reçue dans l'élément de support (81) et positionnée par l'élément de positionnement (82).

9. Module de batterie selon la revendication 7, dans lequel la gorge de câblage (6) est liée à l'unité d'installation (8).

10. Module de batterie selon la revendication 1, dans lequel le module BIC (4) comporte un logement et une carte de circuit imprimé disposée à l'intérieur du logement et connectée électriquement au câble d'échantillonnage (5).

11. Module de batterie selon la revendication 1, dans lequel un élément de fixation (9) pour fixer le module BIC (4) est disposé sur le boîtier (3).

12. Module de batterie selon la revendication 11, dans lequel une pluralité de trous filetés (91) sont formés dans l'élément de fixation (9), et l'élément de fixation (9) est monté sur le boîtier (3) par des vis.

13. Module de batterie selon la revendication 11, dans lequel le module BIC (4) est fixé sur l'élément de fixation (9) par une structure d'enclenchement (92) disposée sur l'élément de fixation (9).
